# EUROPEAN PATENT APPLICATION

(11) **EP 2 657 544 A2**
(43) Date of publication of application: **30.10.2013**
(21) Application number: 13460004.8
(22) Date of filing: 11.02.2013
(51) Int. Cl.: F16B 11/00

(54) **Way of joining, especially of a board element, a joining unit, especially of a board element and a joining profile**

(30) Priority: 25.04.2012 PL 39897212
(71) Applicant: Malecki, Bogdan, 63-830 Pepowo (PL)
(72) Inventor: Malecki, Bogdan, 63-830 Pepowo (PL)

(57) **Abstract**

Way of joining, especially of a board element, according to the invention, relying on a glue joining of at least one element, which makes up polyester laminate or material of a similar kind, characterised in that , at least one element ( 1 ) for joining , one joins in a joining profile ( 3 ) in such a way, that the element ( 1 ), from poliester laminate or from material of the same kind, for joining, one places in a recess ( 4 ) of the joining profile ( 3 ), moreover before placing the element ( 1 ), in the grooves ( 6 ) which are on the inner surface of a shelf ( 7 ) of the recess ( 4 ) one puts a layer of glue, then in the recess ( 4 ) one places the element ( 1 ) placing the element ( 1 ) beside glue and one presses down the element ( 1 ), advantageously pointwise to the surface covered with glue.

Joining unit, especially of a board element, according to the invention, for joining at least one element which is polyester laminate or material of similar kind, moreover in the joining unit there is an intermediate element which enables joining, having a shape of a joining profile, characterised in that, the joining profile ( 3 ) contains, opened from outer side, a recess ( 4 ), in which the element ( 1 ) for joining is placed, moreover one of the shelves ( 7 ) of the recess ( 4 ) of the joining profile ( 3 ) is longer than a second shelf ( 9 ) of the recess ( 4 ) and it contains grooves ( 6 ) placed on the inner surface of the shelf ( 7 ).

Joining profile, according to the invention, for joining at least one element, especially a board element, which is polyester laminate or material of similar kind, moreover the lenght of the profile is dependent on the lenght of element or elements, which are to be placed in the joining profile and joined, characterised in that, it has a slat ( 11 ), from which the shelves ( 7, 9 ) are led making a recess ( 4 ) opened from outer side , moreover the shelf ( 7 ) of the recess ( 4 ) of the joining profile ( 3 ) is longer than the second shelf ( 9 ) of the recess ( 4 ) and it has grooves ( 6 ) situated on the inner surface of the shelf ( 7 ).

## Description

This invention relates to a way of joining, especially of a board element, a joining unit, especially of a board element and a joining profile.

The invention is for joining one or more board elements, in this case made of different or the same materials in order to make walls or other elements of casing or building, for example casing of a trailer for carrying animals. For example polyester laminate or material of simliar kind may be used as one of the elements, and plywood maybe second element.

It is known joining of two board elements made of different materials, for example one element made of polyester laminate and second made of plywood which relies on that the end of one of the elements for joining one places on the end of the second element and then one joins them by means of rivets or by means of screws or bolts. After joining above mentioned elements one covers points of joints by a masking batten which is situated on the whole lenght of a made joining.

High cost connected with labour and material consumption is inconvenience of that method of joining, as making joining requires using connecting parts as screws or bolts and a masking batten.

Joining of elements by means of glues is also widespread. Considering usage of glues of high quality now, such joining is undoubtebly technologically simple and it allows effective gluing after proper preparation of surfaces of elements which are to be joined and after choosing the proper kind of glue.

However essential inconvenience of that metod of joining is a demand connected with preservation of required time for drying of glue and making firm glue joining. It causes elongation of technological process, what by mass production causes increasing of costs of production of products.

In order to eliminate above mentioned inconvieniences one made an invention, which enables realization of joining by means of gluing one or more, advantageously two elements, especially board elements, made from the same or different materials with keeping continuity of process.

Way of joining, especially of a board element, according to the invention, relying on a glue joining of at least one element, which makes up polyester laminate or material of a similar kind, **characterised in that**, at least one element for joining , one joins in a joining profile in such a way, that the element, from poliester laminate or from material of the same kind, for joining, one places in a recess of the joining profile, moreover before placing the element, in the grooves which are on the inner surface of a shelf of the recess one puts a layer of glue. Then in the recess one places the element , placing the element beside glue and one presses down the element, advantageously pointwise to the surface covered with glue.

In the first version of a way, one joins one element in the joining profile, and the element 1 for joining which is in the recess one presses down by means of pressure means, which one leaves in the joint for all time, not disassemblying them after gluing.

In the second version, one joins some elements in the joining profile, advantageously two, moreover next element for joining one places in the second recess of the joining profile, in which one puts a layer of glue ealier and then one pressures down the element, advantageously pointwise to the surface covered with glue. Elements for joining which are in the recesses one presses down by means of pressure means which one leaves in the joint for all time, not disassemblying them after gluing.

Joining unit, especially of a board element, according to the invention, for joining at least one element which is polyester laminate or material of similar kind, moreover in the joining unit there is an intermediate element which enables joining, having a shape of a joining profile, **characterised in that**, the joining profile contains, opened from outer side, a recess, in which the element for joining is placed, moreover one of the shelves of the recess of the joining profile is longer than a second shelf of the recess and it contains grooves placed on the inner surface of the shelf.

In the first version, joining unit contains one recess, moreover in the shelf of the recess there are pressure means, advantageously screws.

In the second version, joining unit has two recesses situated, advantageously opposite each other and opened from outer sides, in which there are placed elements for joining, moreover in the shelf of each recess there are pressure means, advantageously screws.

Joining profile, according to the invention, for joining at least one element, especially a board element, which is polyester laminate or material of similar kind, moreover the lenght of the profile is dependent on the lenght of element or elements, which are to be placed in the joining profile and joined, **characterised in that**, it has a slat, from which the shelves are led making a recess opened from outer side , moreover one shelf of the recess of the joining profile is longer than the second shelf of the recess and it has grooves situated on the inner surface of the shelf.

Joining profile, in the first version has one recess, and in the second version except the recess it has at least one more recess opened from outer side, formed from shelves led from the slat.

Technical solutions of a joining unit according to the invention enable effective and quick joining of elements especially board elements made of different or the same materials. It is especially essential in case of joining plastic laminate with wooden plywoods. Laminate are light and durable, while plywood is tough, that is why one places plywood on sides and loading platform of a trailer e.g. in places where load is to be carried, but one fills for example walls or sectioned shaped places by laminates.

This way of joining elements in view of using punctual pressure of elements to the surface with the layer of glue placed in recesses of a joining profile prevents stopping technological process for the time of drying. Way of joining may be realised regardless technological breaks designed for time of drying of glue. Pressure means used in joining cause preliminary immobility of elements being joined, what makes further assembly of produced products, for example a trailer, possible.

Process of joining of two elements is realised in a continuous way; stoppage of production does not take place. Pressure means are not dissasembled, they are all time in a made joining. Their inner position in the profile causes them not to be visible on walls of a trailer. Construction of a joining unit and run of a process of joining of two elements by gluing causes a joint to be tight, hermetic and clean from outer side.

Use of the invention reduces costs of production of a product.

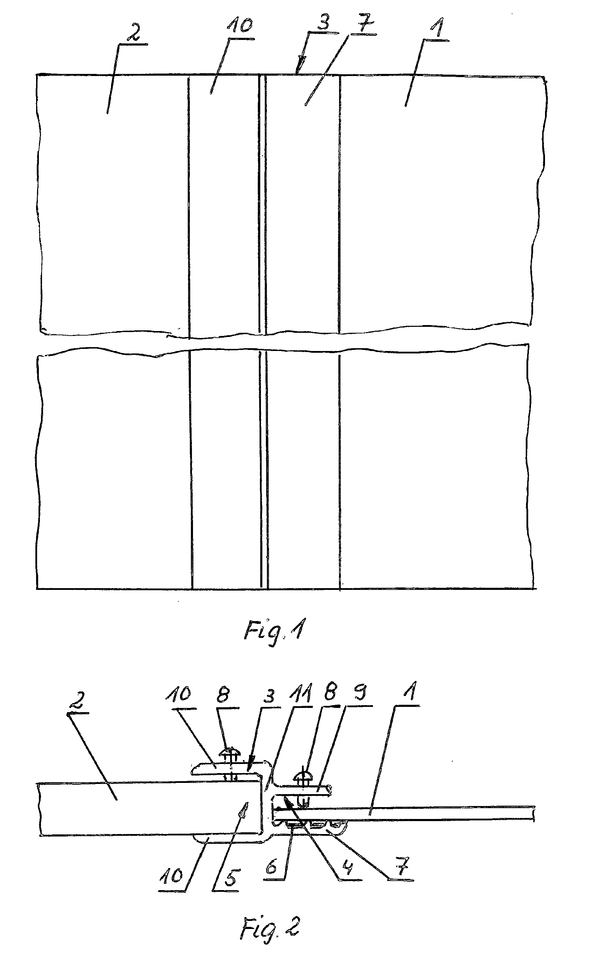

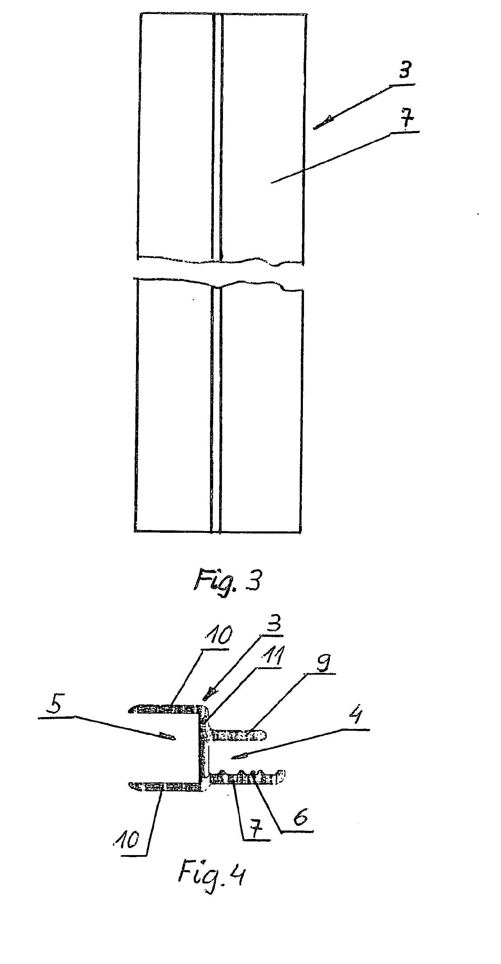

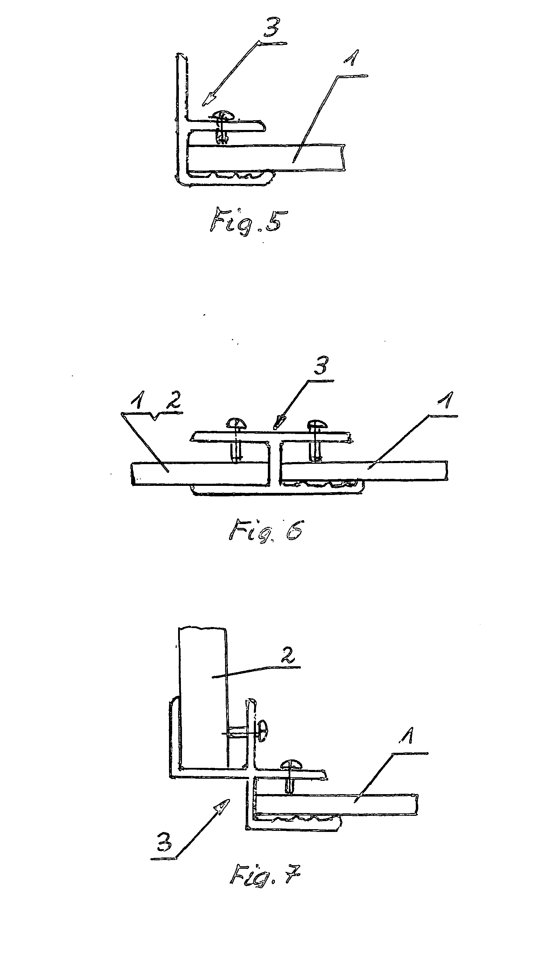

The object of the invention is shown by the example of the drawing, on which fig.1 represents a joining unit for two board elements in a side view, fig.2 - a joining unit from above view, fig.3 - a joining profile from a side view, fig.4 - a joining profile from above, fig .5 - a joining unit for one board element, fig.6 - a joining unit for two board elements , fig.7 - a joining unit for two elements, moreover recesses of a joining profile are shown towards each other.

Way of joining, especially of a board element, according to the invention, relies on a glue joining of one or two elements made of the same or different materials. In case of usage of two different elements, one of them makes up an element 1 made of polyester laminate or material of similar kind, but second makes up an element 2 made of plywood. In the way of joining , at least one element 1 for joining, one joins in a joining profile 3 in such a way, that the element 1, from poliester laminate or from material of the same kind, for joining, one places in a recess 4 of the joining profile 3. Before placing the element 1, in the grooves 6 which are on the inner surface of a shelf 7 of the recess 4 one puts a layer of glue. Then in the recess 4 one places the element 1 placing the element 1 beside glue and one presses down the element 1, advantageously pointwise to the surface covered with glue.

In the first version of the way , one joins one element 1 in the joining profile, and the element 1 for joining which is in the recess 4 one presses down by means of pressure means 8, which one leaves in the joint for all time, not dissemblying them after gluing.

In the second version of the way, one joins some elements in the joining profile, advantageously two, moreover next element 2 for joining one places in the second recess 5 of the joining profile 3, in which one puts a layer of glue ealier and then one pressures down the element 2, advantageously pointwise to the surface covered with glue. Elements 1, 2 for joining which are in the recesses 4, 5 one presses down by means of pressure means 8 which one leaves in the joint for all time, not disassemblying them after gluing.

Joining unit, especially of a board element, according to the invention is for joining at least one element which is polyester laminate or material of similar kind. In the joining unit there is an intermediate element which enables joining, having a shape of a joining profile, 3 which contains a recess 4, opened from outer side. The element 1 for joining is placed in the recess 4.

One of the shelves 7 of the recess 4 of the joining profile 3 is longer than a second shelf 9 of the recess 4 and it contains grooves 6 placed on the inner surface of the shelf 7.

Joining unit, in the first version contains one recess 4, moreover in the shelf 9 of the recess 4 there are pressure means 8, advantageously screws. Joining unit, in the second version has two recesses 4, 5 situated, advantageously opposite each other and opened from outer sides, in which there are placed elements 1, 2 for joining, moreover in the shelf 9, 10 of each recess 4, 5 there are pressure means 8, advantageously screws. Joining profile, according to the invention is for joining at least one element, especially a board element, which is polyester laminate or material of similar kind. The lenght of the profile is dependent on the lenght of element or elements, which are to be placed in the joining profile and joined. The joining profile has a slat 11, from which the shelves 7, 9 are led making a recess 4 opened from outer side. The shelf 7 of the recess 4 of the joining profile 3 is longer than the second shelf 9 of the recess 4 and it has grooves 6 situated on the inner surface of the shelf 7.

In the first version, the joining profile has one recess 4, and in the second version, except the recess 4 it has at least one more recess 5 opened from outer side, formed from shelves 10, led from the slat 11.

## Claims

1. Way of joining, especially of a board element, relying on a glue joining of at least one element, which makes up polyester laminate or material of a similar kind, **characterised in that**, at least one element (1) for joining, one joins in a joining profile (3) in such a way, that the element (1), from poliester laminate or from material of the same kind, for joining, one places in a recess (4) of the joining profile (3), moreover before placing the element (1), in the grooves (6) which are on the inner surface of a shelf (7) of the recess (4) one puts a layer of glue, then in the recess (4) one places the element (1) placing the element (1) beside glue and one presses down the element (1), advantageously pointwise to the surface covered with glue.

2. Way, according to claim 1, **characterised in that**, one joins one element (1) in the joining profile, and the element (1) for joining which is in the recess (4) one presses down by means of pressure means (8), which one leaves in the joint for all time, not disassemblying them after gluing.

3. Way, according to claim 1, **characterised in that**, one joins some elements in the joining profile, advantageously two, moreover next element (2) for joining one places in the second recess (5) of the joining profile (3), in which one puts a layer of glue ealier and then one pressures down the element (2), advantageously pointwise to the surface covered with glue and elements (1, 2) for joining which are in the recesses (4, 5) one presses down by means of pressure means (8) which one leaves in the joint for all time, not disassemblying them after gluing.

4. Joining unit, especially of a board element for joining at least one element which is polyester laminate or material of similar kind, moreover in the joining unit there is an intermediate element which enables joining, having a shape of a joining profile, **characterised in that**, the joining profile (3) contains, opened from outer side, a recess (4), in which the element (1) for joining is placed, moreover one of the shelves (7) of the recess (4) of the joining profile (3) is longer than a second shelf (9) of the recess (4) and it contains grooves (6) placed on the inner surface of the shelf (7).

5. Joining unit, according to claim 4, **characterised in that**, it contains one recess (4), moreover in the shelf (9) of the recess (4) there are pressure means (8), advantageously screws.

6. Joining unit, according to claim 4, **characterised in that**, it has two recesses (4, 5) situated, advantageously opposite each other and opened from outer sides, in which there are placed elements (1, 2) for joining, moreover in the shelf (9, 10) of each recess (4, 5) there are pressure means (8), advantageously screws.

7. Joining profile for joining at least one element, especially a board element, which is polyester laminate or material of similar kind, moreover the lenght of the profile is dependent on the lenght of element or elements, which are to be placed in the joining profile and joined, **characterised in that**, it has a slat (11), from which the shelves (7, 9 )are led making a recess (4) opened from outer side , moreover the shelf (7) of the recess (4) of the joining profile (3) is longer than the second shelf (9) of the recess (4) and it has grooves (6) situated on the inner surface of the shelf (7).

8. Joining profile, according to claim 7, **characterised in that**, it has one recess (4).

9. Joining profile according to clam 7, **characterised in that**, except the recess (4) it has at least one more recess (5) opened from outer side, formed from shelves (10) led from the slat (11).
